Europäisches Patentamt

European Patent Office

Office européen des brevets

(11) Numéro de publication: **0 263 760 B1**

## (12) FASCICULE DE BREVET EUROPEEN

(45) Date de publication de fascicule du brevet:
**12.06.91**

(51) Int. Cl.⁵: **B29C 53/84**, B29C 67/14, B29C 35/02, F16L 9/12

(21) Numéro de dépôt: **87402231.2**

(22) Date de dépôt: **07.10.87**

(54) **Procédé de fabrication de tubes composites pour le transport de fluides divers.**

(30) Priorité: **09.10.86 FR 8614069**

(43) Date de publication de la demande:
**13.04.88 Bulletin 88/15**

(45) Mention de la délivrance du brevet:
**12.06.91 Bulletin 91/24**

(84) Etats contractants désignés:
**AT BE CH DE ES GB GR IT LI LU NL SE**

(56) Documents cités:
EP-A- 0 087 855          BE-A- 558 037
CH-A- 537 550            DE-A- 2 353 568
GB-A- 1 450 127          GB-A- 2 034 433
US-A- 3 290 197

(73) Titulaire: **Cretel, Jacques Louis
2 Rue de la Solette Raray
F-60810 Barbery(FR)**

(72) Inventeur: **Cretel, Jacques Louis
2 Rue de la Solette Raray
F-60810 Barbery(FR)**

(74) Mandataire: **Durand, Yves Armand Louis et al
Cabinet Z. Weinstein 20, Avenue de Friedland
F-75008 Paris(FR)**

## Description

La présente invention a essentiellement pour objet un procédé pour la fabrication d'un tube pour le transport de matériaux ou fluides divers et quelconques suivant le préambule de la revendication unique.

On connaît déjà des tubes réalisés à partir de fibres de verre et de résine, ces tubes pouvant être introduits et gonflés dans une canalisation détériorée dans le but de revêtir et ainsi rénover la paroi interne de cette canalisation. Ce genre de tube est fabriqué à partir de matériaux composites en feuille dont les bords sont soudés ou cousus, ce qui confère une faiblesse aux tubes au niveau de la ligne de couture ou de soudure. Autrement dit, lors du gonflage du tube, celui-ci présente nécessairement des points de faiblesse dus à la discontinuité structurelle suivant une ligne correspondant à une génératrice du tube. En outre, ce genre de tube, une fois mis en place à l'intérieur de la canalisation et revêtant sa paroi interne, constitue en quelque sorte un tube perdu, car on ne peut pas contrôler la dimension de l'espace annulaire interne. En d'autres termes, il ne peut pas être récupéré pour réaliser par exemple le revêtement intérieur d'une autre canalisation, après réparation de la canalisation contenant, à titre provisoire, le tube.

Par ailleurs, on connaît depuis longtemps des tubes rigides en chlorure de polyvinyle par exemple qui servent au transport de gaz ou liquides divers. Mais ces tubes, s'ils sont rigides et solides, c'est-à-dire ne comportent pas de points de faiblesse, ne peuvent pas être utilisés pour le revêtement intérieur provisoire ou définitif de canalisations endommagées.

D'un autre côté, on connaît d'après le document CH-A-537-550, sur lequel le preambule de la revendication unique est basé, un tube en matière synthétique pouvant être fabriqué en continu et comportant depuis l'intérieur vers l'extérieur une couche de revêtement interne, une première couche tricotée de fibres de verre et une deuxième couche tricotée de fibres de verre, ces deux couches de fibres de verre étant imprégnées d'une résine et étant solidaires de la couche interne du tube.

Mais, outre le fait que ce tube ne peut être fabriqué que par chauffage externe pour polymériser la résine, l'enroulement de mèches ou rovings interposé entre les deux couches de fibres de verre ne peut pas prétendre conférer au tube les qualités de rigidité et de solidité requises pour qu'il puisse être monté et servir de revêtement interne dans une canalisation endommagée.

Par ailleurs, le document GB-A-2 034 433 décrit un tube qui peut être fabriqué par gonflage et qui se compose simplement d'un âme revêtue d'une tresse métallique elle même recouverte d'une couche de matière synthétique.

Mais là encore, le tube est obtenu par chauffage externe, c'est-à-dire par passage au travers d'un four à induction, pour que la matière synthétique s'accroche dans les interstices de la tresse métallique, et ce tube, s'il présente une souplesse indéniable, ne peut pas en revanche être utilisé pour le revêtement de canalisations endommagées en raison de sa faible résistance sur le plan mécanique et tenant au fait qu'il n'est pas suffisamment renforcé.

Aussi, la présente invention a pour but de remédier notamment aux inconvénients ci-dessus en proposant un procédé permettant la fabrication en continu, très rapide et pour un faible coût, d'un tube qui présente des caractéristiques mécaniques élevées en tout point et sur toute sa longueur et qui peut être utilisé non seulement comme tube de revêtement intérieur des conduites ou canalisations endommagées, mais aussi comme un tube rigide classique, comme le sont les tubes préfabriqués actuels, pour transporter des matériaux ou fluides divers.

A cet effet, l'invention a pour objet un procédé de fabrication d'un tube de section quelconque pour le transport de fluides quelconques, comprenant au moins un ensemble de couches concentriques et à savoir, depuis l'intérieur vers l'extérieur, une couche, puis une première couche et une deuxième couche de fibres de verre imprégnées de résine et solidaires de la couche, caractérisé en ce que après avoir revêtu un mandrin de la couche qui est en une matière plastique imperméable, on effectue sur cette couche un tissage circulaire en continu des première et deuxième couches dont les fibres de verre sont liées ou entrelacées orthogonalement de biais ou en droit fil par rapport à l'axe du tube, ladite deuxième couche étant tissée après qu'une couche de matériau électriquement conducteur formant un fil métallique, relié à une source d'alimentation en courant, ait été enroulée autour de la première couche, puis on imprègne de résine les couches pour les solidariser de la couche ce après quoi la couche est alimentée en courant par la source pour chauffer la résine dont la température est détectée par une pluralité de sondes thermiques prévues sur la périphérie externe ou incorporées dans la deuxième couche et reliées à un appareil enregistreur de mesure lui-même relié à un ordinateur qui est connecté à la source et qui régule l'alimentation en courant de la couche selon la température de la résine transmise par l'appareil à l'ordinateur.

Mais d'autres caractéristiques et avantages de l'invention apparaîtront mieux dans la description détaillée qui suit et se réfère aux dessins annexés, donnés uniquement à titre d'exemple, et dans lesquels :

- la figure 1 est une vue en coupe perpendiculaire à son axe, d'un tube selon l'invention, après formage;
- la figure 2 est une vue de dessus d'une portion de ce tube avant formage et montrant schématiquement un mode de réalisation de liage des fibres de verre;
- la figure 3 est une vue similaire à la figure 2, mais montrant un autre mode de réalisation de liage des fibres de verre du tube;
- la figure 4 est une vue très schématique illustrant les phases opératoires essentielles à effectuer pour fabriquer ce tube; et
- la figure 5 est une vue en demi-coupe axiale du tube et illustre schématiquement les divers moyens utilisés pour contrôler et réguler la température de chauffage du tube, c'est-à-dire la polymérisation de la résine incorporée dans les couches concentriques constituant ledit tube.

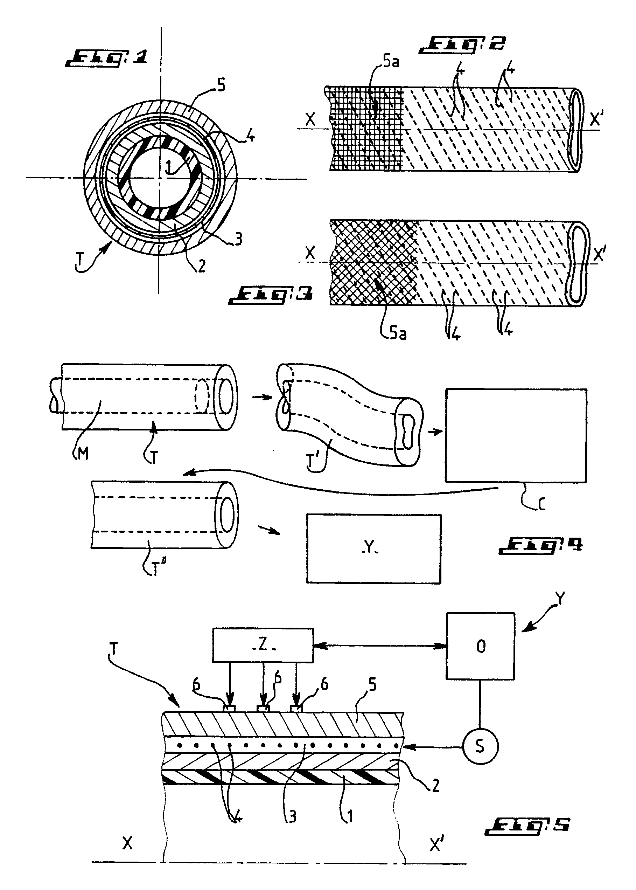

Suivant un exemple de réalisation, et en se reportant plus particulièrement aux figures 1 et 5, un tube réalisé conformément à l'invention comprend essentiellement quatre couches de matériau solidaires les unes des autres grâce à l'incorporation d'une résine synthétique, et qui sont depuis l'intérieur du tube jusqu'à l'extérieur, les suivantes :

- une couche imperméable formant manchon, réalisée en une matière plastique appropriée, par exemple à base de polyéthylène, polypropylène ou analogue, cette couche étant repérée en 1 ;
- une première couche de fibres de verre 2 qui est solidaire de la couche en matière plastique imperméable 1 ;
- une couche 3 de matériau électriquement conducteur, cette couche étant de préférence constituée par un métal formant par exemple un manchon, ou bien, comme cela est représenté, un fil métallique en spirale 4 interposé entre la première couche de fibres de verre 2, et une deuxième couche de fibres de verre 5 qui forme la partie extérieure du tube.

Une résine synthétique appropriée telle que par exemple une résine de polyester ou de polyuréthane est incorporée aux couches 2, 3 et 5 qui sont ainsi solidaires les unes des autres et également du manchon intérieur 1 en matière plastique imperméable.

Comme on le voit sur la figure 2, les fibres de verre 5a de la couche 5, et également celles de la couche 2 si on le désire, sont entrelacées orthogonalement et orientées en droit fil par rapport à l'axe X-X' du tube.

Ces fibres de verre peuvent suivant un autre mode de réalisation, et comme on le voit sur la figure 3 être entrelacées ou liées orthogonalement, mais de biais par rapport à l'axe X-X' du tube.

Bien entendu, on peut envisager, sans sortir du cadre de l'invention, une épaisseur appropriée quelconque pour la couche de plastique 1 et les deux couches de fibres de verre 2 et 5, ainsi qu'une orientation appropriée quelconque des fibres de verre dans la résine, en fonction des caractéristiques de résistance mécanique que l'on veut obtenir, c'est-à-dire finalement en fonction de l'usage spécifique du tube que l'on veut faire.

Mais on expliquera maintenant le procédé de fabrication du tube qui vient d'être décrit en se reportant plus particulièrement aux figures 4 et 5, ledit procédé permettant une fabrication en continu et contrôlée.

Comme on le voit sur la figure 4, on utilise un mandrin montré schématiquement en M qui est tout d'abord revêtu d'une couche en matière plastique destinée à former la couche imperméable 1 décrite précédemment.

Ensuite, on effectue un tissage circulaire en continu de la première couche de fibres de verre 2, puis de la deuxième couche de fibres de verre 5, étant bien entendu qu'avant de tisser la deuxième couche 5, un fil métallique 4 a été enroulé en spirale autour de la couche 2. On observera que, pour plus de simplicité, on n'a pas représenté toutes les couches ci-dessus sur la figure 4, mais on s'est contenté de montrer schématiquement une seule couche qui en fait comprend les couches concentriques successives et forme finalement le tube T.

Après tissage circulaire, le tube T qui est mou et visible en T' sur la figure 4 sort du mandrin M et est envoyé dans un caisson C sous vide dans lequel on injecte de la résine. Le tube T' va donc être imprégné de résine en ce qui concerne les couches 2, 3 et 5, ladite résine solidarisant lesdites couches, du manchon imperméable en matière plastique 1.

Ensuite, on procède au formage du tube T' sortant de l'imprégnation C, ce formage étant réalisé, comme cela est connu en soi par un gonflage, de sorte que le tube prend la forme sensiblement circulaire visible en T'' sur la figure 4.

Et, finalement, le tube T'' est chauffé à l'aide de l'ensemble Y qui est mieux visible sur la figure 5 et que l'on décrira maintenant.

Le chauffage est réalisé par le fil métallique 4 qui non seulement renforce le tube mais qui joue le rôle d'une résistance chauffante alimentée par une source d'alimentation en courant S.

Plus précisément, le tube T comporte une pluralité de capteurs ou sondes thermiques 6 prévus sur la périphérie externe ou même incorporés dans la couche 5 de fibres de verre. Ces sondes sont reliées à un appareil de mesure enregistreur Z, lequel est relié à un ordinateur 0 connecté à la source S d'alimentation en courant du fil métallique résistant 4.

Ainsi, l'ordinateur 0 en fonction des données transmises par l'appareil Z, pourra réguler l'alimentation en courant du fil résistant chauffant 4. On notera ici que l'appareil Z pourra sélectionner la sonde la plus froide de façon à garantir l'élévation de température adoptée sur le point considéré. On comprend donc que la polymérisation de la résine s'effectuera en tout point d'une manière homogène sur toute la longueur du tube sortant du mandrin M.

On a donc réalisé suivant l'invention un tube dont la fabrication peut être effectuée en continu d'une manière très rapide, qui présente les qualités d'imperméabilité voulues en raison de la présence du manchon en plastique 1 du côté intérieur, et qui présente des caractéristiques mécaniques élevées et homogènes sur toute sa longueur en raison notamment de l'absence de raccords ou liaisons quelconques par couture ou soudage.

Bien entendu, l'invention n'est nullement limitée au mode de réalisation décrit et illustré qui n'a été donné qu'à titre d'exemple.

C'est ainsi que la nature de la résine, les épaisseurs relatives des couches concentriques constituant le tube et la nature ou la forme du matériau électriquement conducteur interposé entre les couches de fibres de verre, peuvent être quelconques sans sortir du cadre de l'invention.

## Revendications

1. Procédé de fabrication d'un tube de section quelconque pour le transport de fluides quelconques, comprenant au moins un ensemble de couches concentriques et à savoir, depuis l'intérieur vers l'extérieur, une couche intérieure (1), puis une première couche (2) et une deuxième couche (5) de fibres de verre imprégnées de résine et solidaires de la couche (1), caractérisé en ce que après avoir revêtu un mandrin (M) de la couche (1) qui est en une matière plastique imperméable, on effectue sur cette couche un tissage circulaire en continu des première (2) et deuxième (5) couches dont les fibres de verre (5a) sont liées ou entrelacées orthogonalement de biais ou en droit fil par rapport à l'axe (X-X') du tube, ladite deuxième couche (5) étant tissée après qu'une couche (3) de matériau électriquement conducteur formant un fil métallique (4), relié à une source d'alimentation en courant (S), ait été enroulée autour de la première couche (2), puis on imprègne de résine les couches (2, 3, 5) pour les solidariser de la couche intérieure (1) ce après quoi la couche (3) est alimentée en courant par la source (S) pour chauffer la résine dont la température est détectée par une pluralité de sondes thermiques (6) prévues sur la périphérie externe ou incorporées dans la deuxième couche (5) et reliées à un appareil enregistreur de mesure (Z) lui-même relié à un ordinateur (0) qui est connecté à la source (S) et qui régule l'alimentation en courant de la couche (3) selon la température de la résine transmise par l'appareil (Z) à l'ordinateur (0).

## Claims

1. Process for manufacturing a pipe of any section for the conveyance of any fluids, comprising at least an assembly of concentric layers namely, from the inside towards the outside, an inner layer (1), then a first layer (2) and a second layer (5) of glass fibres impregnated with some resin and made fast with the layer (1), characterized in that, after a mandrel (M) is coated with the layer (1) which is made of an impervious plastic material, there is effected on this layer a continuous circular weaving of the first (2) and second (5) layers, the glass fibres (5a) of which are orthogonally connected or interwoven in a skew or orthogonal relationship with the pipe axis (X-X'), said second layer (5) being woven after a layer (3) of an electrically conducting material in the shape of a metal wire (4), connected to a current supply source (S), has been wound about the first layer (2), then the layers (2, 3, 5) are impregnated with resin to make them fast with the inner layer (1), and thereafter the layer (3) is supplied with current from the source (S) for heating the resin, the temperature of which is detected by a plurality of thermal probes (6) provided on the external periphery of or incorporated into the second layer (5) and connected to a recording apparatus (Z) itself connected to a computer (0) which is connected to the source (S) and which regulates the supply of current to the layer (3) according to the temperature of the resin transmitted by the apparatus (Z) to the computer (0).

## Ansprüche

1. Verfahren zur Herstellung eines Rohres beliebigen Querschnitts für den Transport beliebiger Flüßigkeiten, das wenigstens einen Satz konzentrischer Schichten und zwar von innen nach außen eine innere Schicht (1), dann eine erste Schicht (2) und eine zweite Schicht (5) aus Glasfasern, die mit Harz imprägniert und fest mit der Schichte (1) verbunden sind,besitzt,dadurch gekennzeichnet, daß man nach dem Bedecken eines Dornes (M) mit der Schicht (1), die aus undurchlässigem Kunststoff besteht, auf dieser Schicht ein kontinuierliches kreisförmiges Gewebe der ersten (2) und zweiten (5) Schicht erstellt, dessen Glasfasern (5a) orthogonal zueinander und schräg oder rechtlinklig zur Achse (X-X') des Rohres liegend verbunden oder verschlungen sind, wobei die genannte zweite Schicht (5) gewoben worden ist, nachdem eine Schicht (3) aus elektrisch leitendem, einen metallischen Draht (4) bildenden und mit einer Stromquelle (S) verbundenem Stoff um die erste Schicht (2) herum gewickelt worden ist, man dann die Schichten (2,3,5) mit Harz imprägniert, um sie mit der inneren Schicht (1) fest zuverbinden, wonach die Schicht (3) mit Strom aus der Quelle (S) gespeist wird, um das Harz zu erhitzen, dessen Temperatur mit einer Vielzahl von Wärmetastköpfen (6) bestimmt wird, die am äusseren Umfang vorgesehen oder in die zweite Schicht (5) integriert und mit einem Meßspeichergerät (Z) verbunden sind, das seinerseits mit einer Datenverarbeitungsanlage (0) verbunden ist, die an die Quelle (S) angeschlossen ist und die Speisung der Schicht (3) mit Strom gemäß der von dem Gerät (Z) an die Datenverarbeitungsanlage (0) übermittelten Temperatur des Harz es regelt.

Fig. 1

Fig. 2

Fig. 3

Fig. 4

Fig. 5